# EUROPÄISCHE PATENTANMELDUNG

(11) **EP 2 656 733 A1**
(43) Veröffentlichungstag der Anmeldung: **30.10.2013**
(21) Anmeldenummer: 12005094.3
(22) Anmeldetag: 10.07.2012
(51) Int. Cl.: A01M 1/24, A01M 17/00

(54) **System zur Einbringung eines Gases und/oder eines flüssigen Schädlingsbekämpfungsmittels in Erdreich**

(30) Priorität: 26.04.2012 DE 102012008445
(71) Anmelder: Linde Aktiengesellschaft, 80331 Munich (DE)
(72) Erfinder: Weis, Volker, 85276 Pfaffenhofen a.d.Ilm (DE)
(74) Vertreter: Gellner, Bernd

(57) **Zusammenfassung**

Die vorliegende Erfindung betrifft ein System (1) zur Einbringung eines Gases und/oder flüssigen Schädlingsbekämpfungsmittels in Erdreich (3), wobei ein Schlauch (2) zur Zuführung des Gases und/oder des Schädlingsbekämpfungsmittels als solches oder als Wassergemisch vorgesehen ist, wobei als Schlauch ein insbesondere unterirdisch verlegter, proröser Schlauch (2) vorgesehen ist.

## Beschreibung

Die Erfindung betrifft ein System zur Einbringung eines Gases und/oder eines flüssigen Schädlingsbekämpfungsmittels in Erdreich.

### Stand der Technik

Zur Bewässerung von Pflanzen oder allgemein von Erdreich sind sogenannte Tropfschläuche bekannt. Solche Schläuche haben in bestimmten Abständen (meist 30cm) jeweils eine Tropföffnung, durch die das Wasser auf die Bodenoberfläche gelangt und von dort in den Boden sickert. Solche Tropfschläuche sind nur oberirdisch verlegbar, da bei unterirdischem Verlegen Erdreich, Sand oder Pflanzenwurzeln in die Tropföffnung gelangen und diese verstopfen können, wodurch eine weitere Nutzung unmöglich würde.

Solche Tropfschläuche kommen bislang auch bei der Bodenbegasung mit einem Schädlingsbekämpfungsmittel (engl. fumigant) zum Einsatz. Bodenbegasung bzw. Bodenbewässerung werden im Englischen als "drip irrigation" bezeichnet. Hierzu wird das gasförmige Schädlingsbekämpfungsmittel in Wasser gelöst durch den Tropfschlauch dem Erdreich zugeführt. Die auf die Bodenoberfläche gelangenden Tropfen dringen in das Erdreich ein. Es ergibt sich eine elliptische oder olivenförmige Verteilung des Schädlingsbekämpfungsmittels im Inneren des Erdreichs, wobei zum ausreichenden Durchdringen des Erdreichs darauf zu achten ist, dass sich die jeweiligen Verteilungen überlappen. Entsprechend muss der Abstand der Tropföffnungen gewählt sein.

Ein weiterer Nachteil der geschilderten herkömmlichen Methode ist der relativ hohe Bedarf an Wasser sowie an Schädlingsbekämpfungsmittel, da beide Substanzen auf die Bodenoberfläche ausgebracht werden. Dies hat Verdunstung und Verdampfung zur Folge, außerdem verflüchtigen sich in Wasser gelöste gasförmige Bestandteile des Schädlingsbekämpfungsmittels schnell. Eine Verlegung der Tropfschläuche in das Innere des Erdreichs birgt die bereits geschilderten nachteiligen Folgen einer Verstopfungsgefahr der Tropföffnungen.

Aufgabe der vorliegenden Erfindung ist daher, die Effektivität der Bodenbegasung bzw. Bodenbewässerung zu erhöhen, inbesondere das Einbringen eines flüssigen und/oder gasförmigen Schädlingsbekämpfungsmittels in Erdreich effektiver zu gestalten, und insbesondere die oben gennanten Nachteile zu vermeiden.

### Kurzfassung der Erfindung

Die Erfindung schlägt ein System zur Einbringung eines Gases und/oder eines flüssigen Schädlingsbekämpfungsmittels in Erdreich gemäß Anspruch 1 vor. Hierbei wird ein Schlauch zur Zuführung des Gases und/oder des Schädlingsbekämpfungsmittels als solches oder als Wassergemisch verwendet, wobei als Schlauch ein insbesondere unterirdisch verlegter, poröser Schlauch vorgesehen ist. Die entsprechende Verwendung eines solchen porösen Schlauches ist Gegenstand des Anspruchs 5. Vorteilhafte Ausgestaltungen ergeben sich aus den Unteransprüchen und der nachfolgenden Beschreibung.

### Vorteile der Erfindung

Es hat sich überraschenderweise herausgestellt, dass die - an sich bekannten - porösen Schläuche hervorragend zur Steigerung der Effektivität der Bodenbegasung und der eingesetzten Begasungsmittel geeignet sind. Unter Bodenbegasung soll im Folgenden umfassend der englische Begriff "drip irrigation" verstanden sein, also die Zuführung von flüssigen oder gasförmigen Stoffen in Erdreich. Hauptzielrichtung der vorliegenden Erfindung ist die Einbringung von gasförmigen und/oder flüssigen Schädlingsbekämpfungsmittel (Fumigants) in Erdreich. Unter "poröser Schlauch" werden im Rahmen dieser Anmeldung sogenannte Perlschläuche oder Schwitzschläuche verstanden. Solche Schläuche sind meist hauptsächlich aus Recycling-Gummi, insbesondere Altreifen-Gummigranulat, hergestellt. Als weiterer Bestandteil kann Polyethylen dienen. Besonders bevorzugt sind Perlschläuche mit einer Zusammensetzung von 50% bis 70%, insbesondere etwa 65% Altreifen-Gummigranulat mit Rest Polyethylen. Solche Perl- oder Schwitzschläuche geben das Wasser über die gesamte Oberfläche ab. Beispielsweise gibt es Perlschläuche mit einem Außendurchmesser von 18mm und einem Innendurchmesser von 13mm. Der maximale Druck sollte etwa 5,0 bar betragen. Der bevorzugte Arbeitsdruck liegt bei etwa 2,0 bar. Die maximale Verlegelänge ohne Druckverlust beträgt etwa 100m. Perlschläuche sind insbesondere unterirdisch verlegbar, da die Gefahr einer Verstopfung der Poren gering ist. Je nach Bepflanzung kann die Verlegetiefe bis zu 60cm betragen. Bei Zufuhr von Wasser beträgt die Wasserabgabe je nach Arbeitsdruck pro Stunde und pro Meter Schlauchlänge bis über 61.

Da der poröse Schlauch das Gas bzw. das flüssige Schädlingsbekämpfungsmittel über seinen gesamten Umfang abgibt, ist eine homogene Einbringung in das Erdreich garantiert. Durch die insbesondere unterirdische Verlegung können Verluste durch Verdampfung, Verdunstung oder Verflüchtigung wirksam vermieden werden. Gasförmiges und/oder flüssiges Schädlingsbekämpfungsmittel kann mit reduzierter Menge Wasser in das Erdreich eingebracht werden. In das Erdreich unterirdisch eingebrachtes Gas kann mit gleichmäßigem Ausbreitungsprofil von unten das Erdreich nach oben hin durchsetzen. Bei unterirdischer Verlegung ist ein Eindringen von Wurzeln in die Mikroporen des porösen Schlauches bei den gängigen Arbeitsdrücken ausgeschlossen. Die porösen Schläuche können auch im Winter im Erdreich verlegt bleiben. Dies bedeutet eine Steigerung der Haltbarkeit des Bodenbegasungssystems im Vergleich zu den herkömmlichen Tropfschläuchen.

Ein unterirdisches Verlegen der porösen Schläuche in einer Tiefe von 2cm bis 8cm, insbesondere von 4cm bis 6cm, weiter insbesondere von 5cm ist besonders vorteilhaft, insbesondere wenn ein Gas/Wassergemisch oder ein flüssiges Schädlingsbekämpfungsmittel dem Erdreich zugeführt werden soll.

Bei einer Verlegung der porösen Schläuche in einer Tiefe von 10cm bis 50cm, insbesondere 20cm bis 40cm, kann sogar reines Gas in das Erdreich optimal injiziert werden.

Die vorliegende Erfindung eignet sich hervorragend für das Einbringen von gasförmigen und/oder flüssigen Schädlingsbekämpfungsmitteln, die sich in Wasser lösen oder Wasser als Trägermittel benötigen, wie Ethan Dinitrile (EDN), Telon oder Metam Sodium, aber auch zur Einbringung von Begasungsmitteln, wie Kohlendioxid (CO₂), welches das Wachstum der Pflanzen positiv beeinflusst.

Die Erfindung betrifft auch die Verwendung eines porösen Schlauches (Schwitzschlauch, Perlschlauch) zur Zuführung von Gas und/oder von flüssigem Schädlingsbekämpfungsmittel in Erdreich, insbesondere in einem System, wie oben beschrieben.

Die Merkmale der Erfindung sind nicht nur in der hier dargestellten Kombination, sondern auch in anderen Kombinationen sowie in Alleinstellung - soweit technisch möglich - einsetzbar, ohne den Rahmen der hier behandelten Erfindung zu verlassen.

Weitere Ausgestaltungen und Vorteile der Erfindung sollen im Folgenden anhand eines Ausführungsbeispiels, das in der Zeichnung illustriert ist, dargestellt werden.

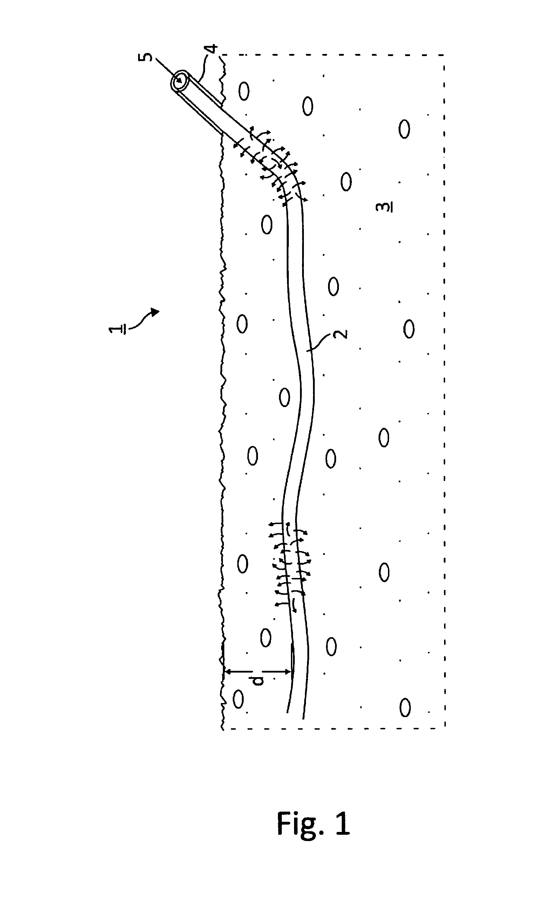

- Figur 1: zeigt schematisch ein erfindungsgemäßes System zur Einbringung eines Schädlingsbekämpfungsmittels in Erdreich.

Die einzige Figur 1 zeigt sehr schematisch ein System zur Einbringung eines gasförmigen Schädlingsbekämpfungsmittels in Erdreich 3, wobei das gasförmige Schädlingsbekämpfungsmittel in Wasser gelöst vorliegt. Alternativ kann auch ein flüssiges Schädlingsbekämpfungsmittel eingesetzt werden. Über den Anschluss 5 eines porösen Schlauches 2 gelangt das Gas/Wassergemisch in das Innere des Schlauchs 2. Figur 1 zeigt einen Ausschnitt des unterirdisch im Erdreich 3 verlegten Schlauches 2. Der poröse Schlauch 2 besitzt über seinen gesamten Umfang und über seine gesamte Länge Mikroporen, durch die Flüssigkeit austreten kann. Beispielhaft sei dies an zwei Stellen des Schlauches 2 durch kleine schwarze Pfeile verdeutlicht. Die Verlegungstiefe d ist ebenfalls eingezeichnet. Sie beträgt in diesem Ausführungsbeispiel etwa 5cm bis 6cm.

Das System zur Einbringung des in Wasser gelösten gasförmigen Schädlingsbekämpfungsmittels ist mit 1 bezeichnet. Erkennbar ist eine völlig homogene Einbringung des Gas/Wassergemischs in das Innere des Erdreichs. Das Wasser dient der Bewässerung des Erdreichs, während gasförmiges Schädlingsbekämpfungsmittel im Erdreich nach oben diffundiert. Es findet eine gleichmäßige Verteilung mit Gas statt. Nachdem die Saat (nicht dargestellt) im Erdreich 3 aufgegangen ist, kann zur Bodenverbesserung und Wachstumssteigerung Kohlendioxid mit der gleichen Methode eingebracht werden. Das System 1 ist auch ideal zur (periodisch) abwechselnden Einbringung von Schädlingsbekämpfungsmittel, Kohlendioxid und/oder Sauerstoff in das Erdreich 3 geeignet. Die Einbringung der genannten Substanzen erfolgt hierbei effektiv ohne die Gefahr von Verflüchtigung, Verdampfung, Verdunstung oder ähnlichem. Gleichzeitig kann der Wasserbedarf im Verhältnis zur Bodenbegasung mit Tropfschläuchen reduziert werden.

Bei einer Verlegung des porösen Schlauchs 2, insbeondere in 20cm bis 40cm Tiefe, erhält man einen optimalen Begasungseffekt, insbesondere wenn reines Gas über den Anschluss 5 zugeführt wird. Zur Vermeidung des Austretens von Gas und/oder Flüssigkeit oberhalb des Erdreichs 3 ist der Schlauch 2 vorzugsweise ummantelt. Die Ummantelung ist mit 4 bezeichnet.

### Bezugszeichenliste

- 1: System
- 2: Schlauch
- 3: Erdreich
- 4: Ummantelung
- 5: Anschluss
- d: Verlegungstiefe

## Patentansprüche

1. System (1) zur Einbringung eines Gases und/oder flüssigen Schädlingsbekämpfungsmittels in Erdreich (3), wobei ein Schlauch (2) zur Zuführung des Gases und/oder des Schädlingsbekämpfungsmittels als solches oder als Wassergemisch vorgesehen ist, wobei als Schlauch (2) ein insbesondere unterirdisch verlegter, poröser Schlauch vorgesehen ist.

2. System nach Anspruch 1, **dadurch gekennzeichnet, dass** der Schlauch (2) unterirdisch in einer Tiefe (d) von 2cm bis 8cm, insbesondere 4cm bis 6cm, weiter insbesondere 5cm verlegt ist.

3. System nach Anspruch 1 oder 2, **dadurch gekennzeichnet, dass** der Schlauch (2), insbesondere zur Zufuhr von Gas, in einer Tiefe (d) von 10cm bis 50cm, insbesondere 20cm bis 40cm verlegt ist.

4. System nach einem der Ansprüche 1 bis 3, **dadurch gekennzeichnet, dass** als Gas ein gasförmiges Schädlingsbekämpfungsmittel und/oder Kohlendioxid verwendet wird.

5. Verwendung eines porösen Schlauches (2) zur Zuführung von Gas und/oder flüssigen Schädlingsbekämpfungsmittel in Erdreich (3), insbesondere in einem System (1) gemäß einem der Ansprüche 1 bis 4.
